# EUROPÄISCHE PATENTSCHRIFT

(11) **EP 0 555 854 B1**
(45) Veröffentlichungstag und Bekanntmachung des Hinweises auf die Patenterteilung: **08.05.1996**
(21) Anmeldenummer: 93102163.8
(22) Anmeldetag: 11.02.1993
(51) Int. Cl.: B65H 23/02

(54) **Verfahren zum Positionieren der Fühler bei einer Bahnlaufregeleinrichtung**
Method for positioning the sensors of a web run control installation
Procédé pour positionner les capteurs d'une installation pour régler la course d'une bande

(30) Priorität: 11.02.1992 DE 4203952
(43) Veröffentlichungstag der Anmeldung: 18.08.1993
(73) Patentinhaber: BST SERVO-TECHNIK GmbH, D-33507 Bielefeld (DE)
(72) Erfinder: Schrauwen, Hans Joachim, W-4901 Hiddenhausen 5 (DE); Nacke, Theodor, W-4817 Leopoldshöhe (DE); Bettführ, Jürgen, Dipl.-Ing., W-4973 Vlotho (DE)
(74) Vertreter: Klingseisen, Franz, Dipl.-Ing.

(56) Entgegenhaltungen:
- EP-A- 0 243 756
- EP-A- 0 367 368
- DE-A- 3 702 836
- GB-A- 996 626

## Beschreibung

Die Erfindung betrifft ein Verfahren nach dem Oberbegriff des Anspruchs 1.

Ein Verfahren dieser Art ist zum Beispiel aus EP-A-0 243 756 bekannt, wobei zusätzlich ein Druckmarkenfühler vorgesehen ist, der eine Druckmarke auf der zu steuernden Bahn abtastet. Hierbei sollen die Signale des Druckmarkenfühlers Priorität haben vor den Signalen der beiden Kantenfühler.

Bei einer Bahnmittenregelung sind zum Erfassen der Bahnkanten beiderseits der Bahn Fühler angeordnet, wobei die beiden Fühler durch ein einmotoriges Fühlerverstellgerät mit gegenläufigen Gewindespindeln gegenläufig zueinander synchron verstellt werden können, um die Mitte der Materialbahn im wesentlichen in der Maschinenmitte zu führen. Eine Verlagerung der Materialbahn bzw. eine Sollwertverstellung kann dabei nur im Meßbereich der Fühler vorgenommen werden, wobei der Meßbereich der Fühler beispielsweise bei einem kreisrunden optischen Fühler durch den Fühlerdurchmesser vorgegeben ist. Wird eine neue Bahn in die Maschine eingezogen, so führen die beiden synchron bewegten Fühler die Materialbahn nach einem Kantensuchvorgang wieder auf die Maschinenmitte, unabhängig von der Position, in der die Materialbahn in die Maschine eingezogen wurde. Nach einem Bahnriß kann somit die neu eingezogene Materialbahn grob vorpositioniert werden, worauf die Regelung mit den synchron bewegten Fühlern nach einem Kantensuchvorgang wieder auf Maschinenmitte erfolgt.

Werden bei einer Bahnmittenregelung zwei unabhängig voneinander verstellbare Fühler vorgesehen, so kann eine Materialbahn in dem gesamten Verstellbereich der beiden Fühlerverstellgeräte geregelt werden, jedoch muß die Materialbahn möglichst genau in der Stellung in die Maschine eingezogen werden, in der sie danach geregelt werden soll. Nach einem Bahnriß oder durch einen neuen Kantensuchvorgang der Fühler geht die zuvor eingestellte Position der Materialbahn verloren, so daß eine neue Positionierung notwendig ist.

Der Erfindung liegt die Aufgabe zugrunde, ein Verfahren der eingangs angegebenen Art so auszubilden, daß z.B. nach einem Bahnriß die neu eingezogene Bahn mit Hilfe der Fühler schnell und genau wieder in der z.B. außermittigen Stellung positioniert wird, in der sie vor dem Bahnriß positioniert war.

Diese Aufgabe wird erfindungsgemäß durch die Merkmale im kennzeichnenden Teil des Anspruches 1 gelöst.

Da beide Fühlerverstellgeräte immer gleichzeitig ein- und ausgeschaltet werden, legen beide Fühler immer den gleichen Stellweg zurück, wodurch die voreingestellte Bahnposition erhalten werden kann. Hierdurch ist es möglich, beim Bahneinzug nach Bahnriß die Materialbahn nur grob vorzupositionieren, worauf selbsttätig die vor dem Bahnriß eingestellte Bahnposition wieder erreicht wird, während gleichzeitig die Materialbahn im gesamten Stellbereich der getrennt voneinander ansteuerbaren Fühlerverstellgeräte geregelt werden kann.

Die Erfindung wird beispielsweise anhand der Zeichnung näher erläutert. Es zeigen:
- Fig. 1: in einer schematischen Darstellung einen Kantensuchvorgang und die Fühlerverstellung bei einem Bahnriß,
- Fig. 2: in gleicher Darstellung die Fühlerpositionierung nach dem Einziehen einer neuen Materialbahn, und
- Fig. 3: schematisch eine Anordnung von Fühlern beiderseits einer Materialbahn.

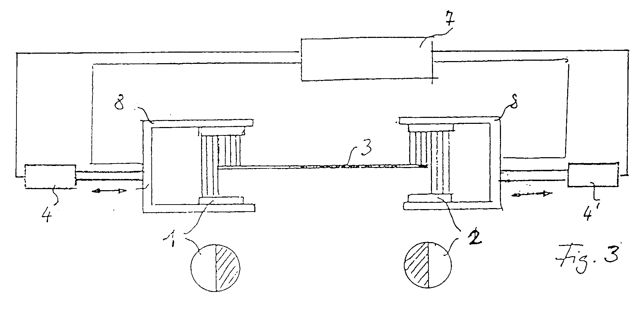

Fig. 3 zeigt in schematischer Darstellung kreisrunde optische Fühler 1, 2 jeweils in einer U-förmigen, von einem Fühlerverstellgerät 4 bzw. 4' verstellbaren Halterung 8 beiderseits einer Materialbahn 3, wobei in dieser Darstellung die Bahnkanten die Fühler 1, 2 jeweils zur Hälfte abdecken. Bei 7 ist eine elektronische Signalverarbeitungs- und Steuereinrichtung dargestellt, welche die Fühlersignale aufnimmt und verarbeitet. Ferner werden durch diese Steuereinrichtung 7 die Fühlerverstellgeräte 4, 4' zum Verstellen der Fühler 1, 2 gesteuert.

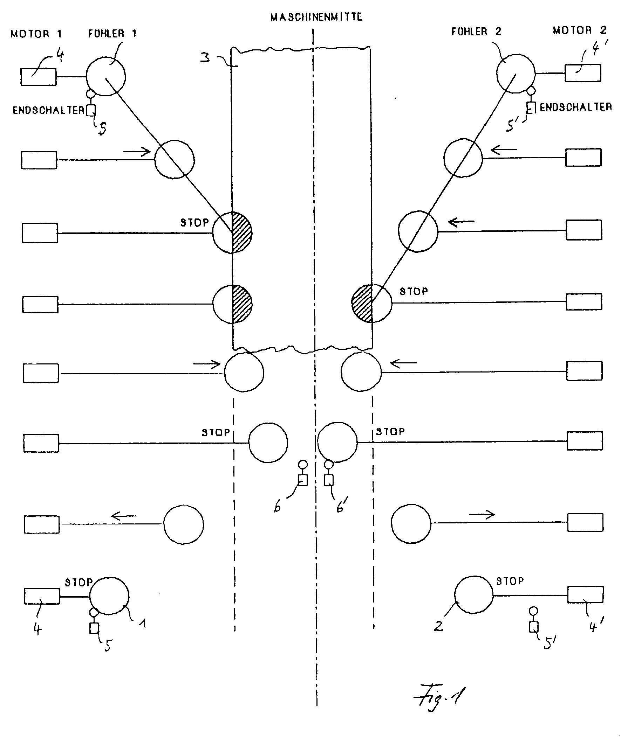

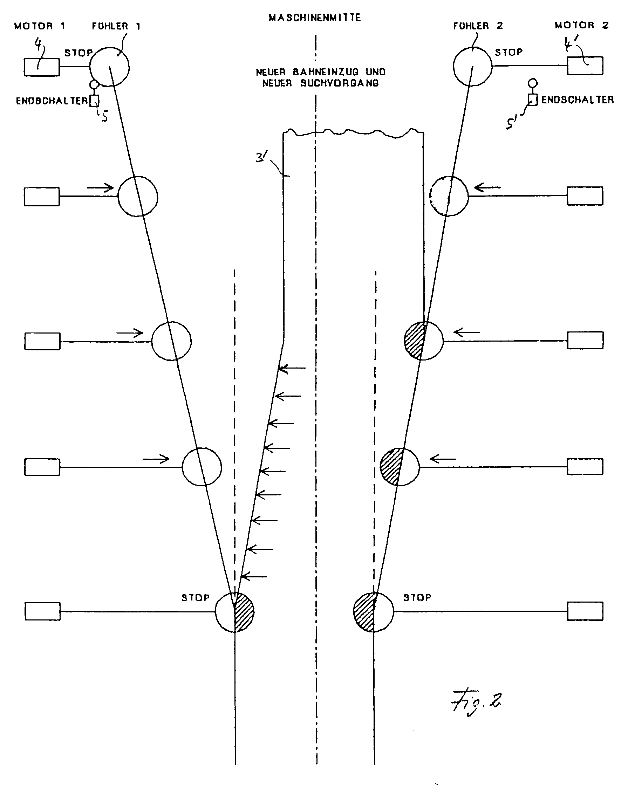

In den Figuren 1 und 2 sind mit 1 und 2 beispielsweise kreisrunde optische Fühler beiderseits einer Materialbahn 3 bezeichnet. Jeder Fühler 1, 2 ist mit dem zugeordneten Fühlerverstellgerät 4, 4' z.B. durch eine von einem Motor angetriebene Gewindespindel verbunden, so daß der Fühler auf die Bahn 3 zu und von dieser weg verstellt werden kann. Die elektronische Signalverarbeitungseinrichtung 7 nimmt die von den Fühlern 1 und 2 abgegebenen Signale auf und verarbeitet diese einerseits für die nicht näher beschriebene Bahnlaufregelung und andererseits zum Ansteuern der Motore 4 und 4' zum Positionieren der Fühler 1 und 2.

In Fig. 1 wird von einer Ausgangsposition ausgegangen, bei der die beiden Fühler 1 und 2 jeweils außen an einem zugeordneten Endschalter 5 bzw. 5' anliegen. Diese Endschalter 5, 5' sind symmetrisch zur Maschinenmitte angeordnet. Die Materialbahn 3, deren Lauf geregelt werden soll, ist außermittig in die Maschine eingelegt. Ausgehend von der äußeren Endstellung werden die beiden Fühler 1 und 2 unabhängig voneinander nach innen auf die Bahn 3 zu bewegt, wobei aufgrund der außermittigen Anordnung der Bahn 3 zunächst der linke Fühler 1 als erster die Bahnkante erreicht und an dieser in der Weise positioniert wird, daß die den Arbeitspunkt bildende Fühlermitte auf die Bahnkante ausgerichtet wird. In dieser Stellung wird der Fühler 1 angehalten, während der Fühler 2, der die Bahnkante noch nicht erreicht hat, weiter nach innen bewegt wird, wie durch einen Pfeil angedeutet ist. Sobald er die Bahnkante erreicht, wird er in der gleichen Weise mit seiner Mitte auf der Bahnkante positioniert und in dieser Stellung angehalten.

Nach diesem Kantensuch- und Positioniervorgang der beiden Fühler 1 und 2 werden diese bis dahin unabhängig voneinander gesteuerten Antriebsmotore 4 und 4' beispielsweise durch einen externen Schalter oder durch einen vorgegebenen Programmschritt elektrisch miteinander gekoppelt, so daß die beiden Fühler 1 und 2 nur noch synchron gegenläufig zueinander durch die Motore 4 und 4' verstellt werden können. Nach der elektrischen Koppelung der beiden Fühlerverstellgeräte wird die Bahnmittenregelung eingeschaltet, welche den Lauf der Bahn 3 derart regelt, daß die beiden Bahnkanten die beiden Fühler gleichmäßig abdecken, wobei die Materialbahn 3 jeweils die eine Hälfte eines Fühlers abdeckt, wie durch Schraffur angedeutet. Ändert sich die Bahnbreite innerhalb des Meßbereichs der beiden Fühler 1 und 2, der dem Fühlerdurchmesser entspricht, so werden die beiden Fühler synchron gegenläufig beispielsweise bei einer Bahnverbreiterung nach außen bewegt, damit die vergrößerte Bahnbreite im Meßbereich der Fühler gehalten und eine Regelung auch bei schwankender Bahnbreite gewährleistet wird.

Tritt ein Bahnriß auf, so werden dementsprechend die beiden Fühler 1 und 2 wie bei einer Bahnbreitenverringerung nach innen bewegt, wie durch Pfeile in Fig. 1 in der fünften Stellung von oben angedeutet. Da keine Bahn mehr vorhanden ist, werden die beiden Fühler so weit nach innen verfahren, bis einer der beiden Fühler als erster den ihm zugeordneten innenliegenden Endschalter 6 bzw. 6' erreicht, worauf beide Fühler 1 und 2 angehalten werden und die Bahnmittenregelung unterbrochen wird. Bei dem Ausführungsbeispiel nach Fig. 1 erreicht der rechte Fühler 2 als erster den Endschalter 6', während sich der Fühler 1 noch in einem Abstand von seinem Endschalter 6 befindet. Beide Fühler 1 und 2 werden gleichzeitig gestoppt. Die Vorrichtung hat dadurch erkannt, daß ein Bahnriß vorliegt, so daß sie auf Bahnrißverhalten umschalten kann. Es folgt ein Steuerbefehl, worauf beide Fühler synchron nach außen gefahren werden, wiederum bis einer der beiden Fühler als erster den außenliegenden Endschalter erreicht, worauf wiederum beide Fühler zugleich gestoppt werden, da ihre beiden Fühlerverstellgeräte bzw. Motore 4, 4' elektrisch miteinander gekoppelt sind. In der untersten Stellung in Fig. 1 hat der linke Fühler 1 als erster den äußeren Endschalter 5 erreicht, worauf beide Fühler 1 und 2 in den dargestellten Stellungen angehalten werden, in denen sie nach wie vor symmetrisch zu der zuvor eingestellten Bahnlage angeordnet sind.

Fig. 2 zeigt in der ersten Stellung die Fühlerposition in der letzten Stellung in Fig. 1, wobei eine neue Materialbahn 3' in die Maschine eingezogen ist. Wie in Fig. 2 dargestellt, ist die Materialbahn 3' beispielsweise nach rechts versetzt zur Maschinenmitte eingezogen, während sie zuvor nach links versetzt zur Maschinenmitte geführt worden ist und auch bei dem weiteren Bahnlauf wieder in dieser ursprünglichen Stellung geführt werden soll, wie in Fig. 2 durch gestrichelte Linien angedeutet.

Nach dem Bahneinzug in der äußeren Stellung der Fühler 1 und 2, wie sie in der ersten Stellung in Fig. 2 wiedergegeben ist, wird ein Kantensuchvorgang ausgelöst, wobei aber im Gegensatz zu dem Kantensuchvorgang im oberen Abschnitt der Fig. 1 nunmehr die beiden Fühler 1 und 2 synchron gegenläufig verstellt werden, indem die elektrische Koppelung der beiden Motore 4 und 4' beibehalten wird. Aufgrund des außermittigen Bahneinzugs erreicht bei dem Ausführungsbeispiel nach Fig. 2 der rechte Fühler 2 als erster die Bahnkante, worauf dieser Fühler 2 mit seinem Arbeitspunkt bzw. der Fühlermitte auf die Bahnkante ausgerichtet werden kann, während der linke Fühler 1 gegenläufig mitbewegt wird.

Hierauf wird für diesen Fühler 2 die Bahnkantenregelung eingeschaltet, während aber beide Fühler 1 und 2 weiterhin synchron nach innen bewegt werden. Durch die Bahnkantenregelung des Fühlers 2 wird die Bahn 3' über ein nicht dargestelltes Stellglied in Richtung auf den Fühler 1, wie durch Pfeile angedeutet, in Fig. 2 nach links bewegt, während der rechte Fühler 2 in seiner Ausrichtung auf die Bahnkante dieser folgt und der linke Fühler 1 synchron damit nach innen bewegt wird, bis auch der zweite Fühler 1 die Bahnkante erreicht. Wenn auch der zweite Fühler die Bahn erreicht hat, werden beide Motore 4,4' gestoppt und die Regelung wird auf Bahnmittenregelung umgeschaltet.

Da während des gesamten Positioniervorganges der Fühler 1 und 2 beide Fühler gleichzeitig gegenläufig verstellt und gleichzeitig in ihrer Verstellbewegung gestoppt wurden, ist die am unteren Ende von Fig. 2 wiedergegebene Stellung der Bahn 3' wieder die gleiche wie die der Bahn 3 in Fig. 1 vor dem Bahnriß, auch wenn diese zur Maschinenmitte versetzt lag.

Erst jetzt können die Motore 4,4' wieder getrennt voneinander angesteuert werden, so daß alle Arbeitsfunktionen möglich sind, z.B. gegenläufige Verstellung bei Bahnbreitenschwankungen und Verstellung in die gleiche Richtung bei einer Bahnlagekorrektur.

Vorzugsweise werden für die Motore 4 und 4' Schritt- oder Synchronmotore verwendet, da hierdurch ein Gleichlauf der beiden Motore sichergestellt ist. Werden z.B. Gleichstrommotore verwendet, so wird der elektrischen Koppelung der beiden Gleichstrommotore ein Folgeregelkreis überlagert, um einen Gleichlauf zu gewährleisten.

Das beschriebene Verfahren der Fühlerpositionierung ist nicht nur bei optischen Fühlern, sondern auch bei anderen Fühlerarten, wie beispielsweise pneumatischen Fühlern, akustischen Fühlern, Ultraschallfühlern oder induktiven Fühlern anwendbar.

Bei Betätigung der Endschalter 5 bzw. 6 wird ein Schließkontakt betätigt, der ein Signal an die elektronische Signalverarbeitungseinrichtung abgibt, die noch vor dem Öffnen des eigentlichen Motorschalters ein Signal für den Motorstopp abgibt. Auf diese Weise wird der Hauptkontakt für die Motorsteuerung nicht mehr benutzt, um einen exakt synchronen Motorstopp an den gekoppelten Fühlerverstellgeräten zu erhalten.

## Patentansprüche

1. Verfahren zum Positionieren zweier Fühler (1, 2) bei einer Bahnlaufregeleinrichtung zum Erfassen der gegenüberliegenden Bahnkanten, wobei die beiden Fühler (1, 2) mittels Fühlerverstellgeräte unabhängig voneinander relativ zu den Bahnkanten verstellbar sind, **dadurch gekennzeichnet** daß nach einem Bahnriß die beiden Fühler (1, 2) durch eine elektronische Steuereinrichtung (7), welche die Fühlersignale verarbeitet und die Fühlerverstellgeräte (4) steuert, derart miteinander gekoppelt werden, daß sie synchron gegenläufig nach innen bewegt werden, bis einer der beiden Fühler als erster seinen zugeordneten Endschalter (6) erreicht, worauf die Bewegung beider Fühler (1, 2) gleichzeitig gestoppt wird und beide Fühler synchron gegenläufig nach außen bewegt werden, bis wiederum einer der beiden Fühler als erster den zugeordneten Endschalter (5) erreicht, worauf die Bewegung beider Fühler (1, 2) wiederum gleichzeitig gestoppt wird, und
daß nach Einzug einer neuen Bahn (3') die beiden Fühler (1, 2) synchron gegenläufig nach innen bewegt werden, bis einer der beiden Fühler als erster die zugeordnete Bahnkante erreicht, worauf dieser Fühler die Kantenregelung der Bahn (3') übernimmt und weiterhin beide Fühler synchron gegenläufig bewegt werden, bis auch der zweite Fühler die Bahnkante erreicht, worauf beide Fühler (1, 2) gestoppt werden und die Bahnlaufregelung in Abhängigkeit von beiden Fühlern (1, 2) wieder einsetzen kann.

2. Verfahren nach Anspruch 1,
**dadurch gekennzeichnet,**
daß die beiden Fühler (1, 2) gleichzeitig angehalten werden, wenn einer der beiden Fühler einen Endschalter (5, 6) erreicht, worauf beide Fühler gleichzeitig wieder angefahren werden.

## Claims

1. Method of positioning two sensors (1, 2) in a web control mechanism for detecting the opposing sides of the web, whereby both sensors (1, 2) can be moved independently of each other relative to the edges of the web by sensor adjustment devices,
**characterized in that**
after a rupture in the web, the sensors (1, 2) are coupled by an electronic control mechanism (7) which processes the sensor signals and controls the sensor adjustment devices (4), said coupling causing said sensors to move inwards synchronically in opposing directions, until one of said sensors is the first to reach its stop switch (6), whereupon the movement of both sensors is simultaneously stopped and both sensors are synchronically moved outwards in opposing directions, until one of said sensors is again the first to reach its stop switch (5), whereupon the movement of both sensors (1, 2) is again simultaneously stopped, and after taking in of a new web (3'), both sensors (1, 2) are synchronically moved inwards in opposing directions until one of said sensors is the first to reach the edge of the web, whereupon said sensor takes over the edge control of said new web (3'), and both sensors are synchronically moved in opposing directions until the second sensor reaches the edge of the web, whereupon both sensors (1, 2) are stopped and the web control mechanism which is dependent on both sensors (1, 2) can restart.

2. Method according to claim 1, characterized in that both sensors (1, 2) are simultaneously stopped when one of said sensors reaches a stop switch (5, 6), whereupon both sensors are simultaneously restarted.

## Revendications

1. Procédé pour le positionnement de deux capteurs (1, 2) dans une installation de régulation de bande pour saisir les bords de bande opposés, les deux capteurs (1, 2) étant réglables au moyen de dispositifs de réglage de capteur indépendamment l'un de l'autre par rapport aux bords de la bande, caractérisé en ce qu'en fonction d'un tracé de la bande, les deux capteurs (1, 2) sont accouplés entre eux de telle sorte que par l'intermédiaire d'un dispositif de commande électronique (7) qui traite les signaux de capteur et commande les dispositifs de réglage de capteur (4), ceux-ci sont déplacés vers l'intérieur de façon asynchrone jusqu'à ce que l'un des deux capteurs atteigne le premier son contact de fin de course affecté (6), le mouvement des deux capteurs (1, 2) étant alors immobilisé simultanément et les deux capteurs étant déplacés vers l'extérieur de façon asynchrone jusqu'à ce qu'à nouveau l'un des deux capteurs atteigne le premier le contact de fin de course affecté (5), après quoi le mouvement des deux capteurs (1, 2) est à nouveau simultanément immobilisé et en ce qu'après l'introduction d'une nouvelle bande (3'), les deux capteurs (1, 2) sont déplacés vers l'intérieur de façon asynchrone jusqu'à ce que l'un des deux capteurs atteigne le premier le bord de la bande affecté, moyennant quoi ces deux capteurs prennent en charge la régulation des bords de la bande (3') et par ailleurs les deux capteurs sont déplacés de façon asynchrone jusqu'à ce que le deuxième capteur atteigne également le bord de la bande, après quoi les deux capteurs (1, 2) sont immobilisés et la régulation de la bande peut à nouveau être mise en oeuvre en fonction des deux capteurs (1, 2).

2. Procédé selon la revendication 1, caractérisé en ce que les deux capteurs (1, 2) sont excités simultanément lorsque l'un des deux capteurs à atteint un contact de fin de course (5, 6), après quoi les deux capteurs sont à nouveau simultanément excités.
